(19) Europäisches Patentamt European Patent Office Office européen des brevets

(11) **EP 4 755 593 A1**

(12) **EUROPEAN PATENT APPLICATION**

(43) Date of publication:
**10.06.2026 Bulletin 2026/24**

(21) Application number: **25217329.9**

(22) Date of filing: **20.11.2025**

(51) International Patent Classification (IPC):
***B25J 9/16*** *(2006.01)*

(52) Cooperative Patent Classification (CPC):
**B25J 9/163; B25J 9/1661**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.12.2024 IN 202421096220**

(71) Applicant: **Tata Consultancy Services Limited Maharashtra (IN)**

(72) Inventors:
• **SINGH, Chandan Kumar**
  **110001 Delhi (IN)**
• **KUMAR, Devesh**
  **201301 Noida (IN)**
• **SANAP, Vipul Ashok**
  **201301 Noida (IN)**
• **SINHA, Rajesh**
  **201305 Noida (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **LLM BASED TASK PLANNING FRAMEWORK FOR A ROBOT FOR EXECUTION OF DOMAIN-SPECIFIC USE CASES (DSUS)**

(57)    Applying large language models (LLMs), even with very large token-sized prompts, does not achieve the task planning performance required for a domain-specific industrial use case (DSU). The method and system disclosed overcome the obstacles of a robotic task planner for DSUs by introducing a task planning framework. Central to the framework is a robotic system ontology that organizes the components of the robotic system in a coherent and systematic manner. This ontology empowers the planning framework to efficiently capture a contextual representation of a DSU using the LLM. Additionally, the research introduces a LLM-tuning regimen referred as chain of hierarchical thought (CoHT), specifically crafted to complement the robotic system ontology. Integrating these two components enables enhancing accuracy, robustness, and throughput of the robot in a cost-effective manner. Furthermore, provided is an empirical methodology to generate LLM-tuning datasets size for a guaranteed performance, leveraging a heuristics-based method.

FIG. 2B

EP 4 755 593 A1

**Description**

CROSS-REFERENCE TO RELATED APPLICATIONS AND PRIORITY

The present application claims priority to Indian application no. 202421096220, filed on December 5, 2024.

TECHNICAL FIELD

The embodiments herein generally relate to the field of robotic systems and, more particularly, to a method and system for building a Large Language Model (LLM) based task planning framework for a robot for execution of domain-specific use cases (DSUs).

BACKGROUND

The utilization of large language models (LLMs) for task planning and reasoning has emerged as a focal point of interest within the robotics research community. However, directly applying the LLMs, even with very large token-sized prompts, does not achieve the task planning performance required for a domain-specific industrial use case (DSU).
A recent research work, Microsoft Chat-GPT Robot Manipulation (MCRM) provides a structured and a scalable prompting approach that can be used for DSUs. However, technical challenges in a few areas remain unaddressed. For instance failure scenarios are not considered while updating robotic environments, requires multiple user-feedback calls for accurate task plan, and an exemplar sequencing-based prompting is absent, which is observed to be an important facet in contextualizing LLMs on domain-specific tasks (DSTs). There are several approaches used to contextualize the LLMs against a human instruction. Some of these include pre-training, fine-tuning, and retrieval augmentation methods, however, these approaches seek either high compute or a huge dataset, which raises questions on their usage and terms of applicability. On the other hand, there are different standard prompting techniques that are readily used to adopt any LLM on the fly and contextualize it on any custom DSU. This either requires a small amount of dataset or does not require at all for LLM-tuning. At the same time, it is observed and noted that it is quite challenging to readily contextualize any off-the-shelf LLM on a DSU. The LLMs repeatedly fail to reason and entirely understand the domain-rules and the nuances of a DSU. Therefore, a LLM-centric structurally potent knowledge representation of the robotic system and the DSU becomes a necessity. This representation must serve towards achieving a better contextualization. In a similar stretch, there have been recent developments to significantly improve upon the existing prompting abilities comprising chain of thought (CoT), tree of thought (ToT), algorithm of thought contextual augmentation, etc. Currently, CoT and ToT are prominently used to improve upon the reasoning abilities of the LLMs. However, it is noted that CoT is effective with abstract-level contextual knowledge and at times misses low-level domain rules in any DSTs. CoT is significantly dependent on the LLM size and typically under-performs with the smaller LLMs. Also, there is a limited scope for verifying the generated intermediate reasoning/thoughts, therefore, there is a high likelihood of reaching an incorrect solution. On the other hand, ToT effectively addresses most of these limitations. Considering this, the implementation of the ToT in a practical DSU seems lucrative, however, is limited by its complexity. It comes at the cost of frequent output token exhaustion and computational complexity, which impacts the objective of achieving low latency and high throughput in DSTs. As a result, ToT might not be necessary for tasks that can be excelled by an intermediary prompting approach. Thus, a new prompting technique is required that is suitable for DSUs.

SUMMARY

Embodiments of the present disclosure present technological improvements as solutions to one or more of the above-mentioned technical problems recognized by the inventors in conventional systems.
For example, in one embodiment, a method for building a task planning framework for a robot is provided. The method includes providing a robotic system ontology having a plurality of modules comprising (a) use-case, (b) embodiment, (c) workspace, (d) objective, (e) relation, (f) experience, and (g) a plan for capturing a contextual representation of a DSU to generate a task plan for a domain specific task using a Large Language Model (LLM).
Further, the method includes deriving a chain of hierarchical thought (CoHT) prompt structure for the LLM via a CoHT framework-initialized-prompt-training augmented with the robotic system ontology, wherein a training dataset used is defined by a plurality of dataset features comprising a unit size, diversity and uncertainty, wherein the plurality of dataset features satisfy a mathematical equation that defines acceptable minimum number of instruction trials.
Further, the method includes enabling querying the LLM with a user query as a command to perform the domain specific task by the robot, wherein the user query is supported with static data from a workspace of the robotic agent, the static data comprising a system state, a plurality of current robot parameter states, a general perception output of a scene, and experiences gained by the robotic agent from past input-output, and wherein combination of the static data, structured in accordance with a CoHT prompt structure, generates a prompt for the LLM.

Furthermore, the method includes classifying the user query as a valid user query based on whether an LLM response to the prompt falls into an action among a plurality of actions defined for the robot for performing the domain specific task while complying with a set of domain rules.

Further, the method includes generating by the LLM the task plan for the domain specific task for the prompt having the valid user query.

Further, the method includes validating the task plan to check for presence of predefined one or more unsafe operations to generate a validated task plan.

Furthermore, the method includes executing the domain specific task by robot in accordance with the validated task plan.

In another aspect, a system for building a task planning framework for a robot is provided. The system comprises a memory storing instructions; one or more Input/Output (I/O) interfaces; and one or more hardware processors coupled to the memory via the one or more I/O interfaces, wherein the one or more hardware processors are configured by the instructions to provide a robotic system ontology having a plurality of modules comprising (a) use-case, (b) embodiment, (c) workspace, (d) objective, (e) relation, (f) experience, and (g) a plan for capturing a contextual representation of a DSU to generate a task plan for a domain specific task using a Large Language Model (LLM).

Further, the one or more hardware processors are configured to derive a chain of hierarchical thought (CoHT) prompt structure for the LLM via a CoHT framework-initialized-prompt-training augmented with the robotic system ontology, wherein a training dataset used is defined by a plurality of dataset features comprising a unit size, diversity and uncertainty, wherein the plurality of dataset features satisfy a mathematical equation that defines acceptable minimum number of instruction trials.

Further, the one or more hardware processors are configured to enable querying the LLM with a user query as a command to perform the domain specific task by the robot, wherein the user query is supported with static data from a workspace of the robotic agent, the static data comprising a system state, a plurality of current robot parameter states, a general perception output of a scene, and experiences gained by the robotic agent from past input-output, and wherein combination of the static data, structured in accordance with a CoHT prompt structure, generates a prompt for the LLM.

Furthermore, the one or more hardware processors are configured to classify the user query as a valid user query based on whether an LLM response to the prompt falls into an action among a plurality of actions defined for the robot for performing the domain specific task while complying with a set of domain rules.

Further, the one or more hardware processors are configured to generate by the LLM the task plan for the domain specific task for the prompt having the valid user query.

Further, the one or more hardware processors are configured to validate the task plan to check for presence of predefined one or more unsafe operations to generate a validated task plan.

Furthermore, the one or more hardware processors are configured to execute the domain specific task by robot in accordance with the validated task plan.

In yet another aspect, there are provided one or more non-transitory machine-readable information storage mediums comprising one or more instructions, which when executed by one or more hardware processors causes a method for building a task planning framework for a robot.

Further, one or more instructions, which when executed by one or more hardware processors causes the computing device to provide a robotic system ontology having a plurality of modules comprising (a) use-case, (b) embodiment, (c) workspace, (d) objective, (e) relation, (f) experience, and (g) a plan for capturing a contextual representation of a DSU to generate a task plan for a domain specific task using a Large Language Model (LLM).

Furthermore, one or more instructions, which when executed by one or more hardware processors, causes the computing device to derive a chain of hierarchical thought (CoHT) prompt structure for the LLM via a CoHT framework-initialized-prompt-training augmented with the robotic system ontology, wherein a training dataset used is defined by a plurality of dataset features comprising a unit size, diversity and uncertainty, wherein the plurality of dataset features satisfy a mathematical equation that defines acceptable minimum number of instruction trials.

Further, the one or more instructions, which when executed by one or more hardware processors causes the computing device to enable querying the LLM with a user query as a command to perform the domain specific task by the robot, wherein the user query is supported with static data from a workspace of the robotic agent, the static data comprising a system state, a plurality of current robot parameter states, a general perception output of a scene, and experiences gained by the robotic agent from past input-output, and wherein combination of the static data, structured in accordance with a CoHT prompt structure, generates a prompt for the LLM.

Furthermore, one or more instructions, which when executed by one or more hardware processors causes the computing device to classify the user query as a valid user query based on whether an LLM response to the prompt falls into an action among a plurality of actions defined for the robot for performing the domain specific task while complying with a set of domain rules.

Further, one or more instructions, which when executed by one or more hardware processors causes the computing device to generate by the LLM the task plan for the domain specific task for the prompt having the valid user query.

Further, one or more instructions, which when executed by one or more hardware processors causes the computing device to validate the task plan to check for presence of predefined one or more unsafe operations to generate a validated task plan.

Furthermore, one or more instructions, which when executed by one or more hardware processors causes the computing device to execute the domain specific task by robot in accordance with the validated task plan.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system (robot) with a Large Language Model (LLM) based task planning framework for execution of domain specific use-cases (DSUs), in accordance with some embodiments of the present disclosure.

FIGS. 2A through 2C depict the overall architecture of the task planning framework for the execution of DSUs, in accordance with some embodiments of the present disclosure.

FIG. 3A and FIG. 3B is a flow diagram illustrating a method for building of the task planning framework for execution of domain specific use-cases (DSUs) by the system 100 (robot), in accordance with some embodiments of the present disclosure.

FIGS. 4A and FIG. 4B depict components of the task planning framework of the system, in accordance with some embodiments of the present disclosure.

FIG. 5 depicts a test bed for the DSU to be executed by the system (robot), in accordance with some embodiments of the present disclosure.

FIGS. 6A and 6B depicts a snippet of the manner in which chain of hierarchical thought (CoHT) is incorporated in few-shot prompting, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system (robot) for Large Language Model (LLM) based task planning framework for a robot for execution of domain-specific use cases (DSUs). Applying large language models (LLMs), even with very large token-sized prompts, does not achieve the task planning performance required for a domain-specific industrial use case (DSU). The method and system disclosed overcome the obstacles of a robotic task planner for DSUs by introducing a task planning framework. Central to the framework is a robotic system ontology that organizes the components of the robotic system in a coherent and systematic manner. This ontology empowers the planning framework to efficiently capture a contextual representation of a DSU using the LLM. Additionally, the research introduces a LLM-tuning regimen referred as chain of hierarchical thought (CoHT), specifically crafted to complement the robotic system ontology. Integrating these two components enables enhancing accuracy, robustness, and throughput of the robot in a cost-effective manner. Furthermore, provided is an empirical methodology to generate LLM-tuning datasets size for a guaranteed performance, leveraging a heuristics-based method.

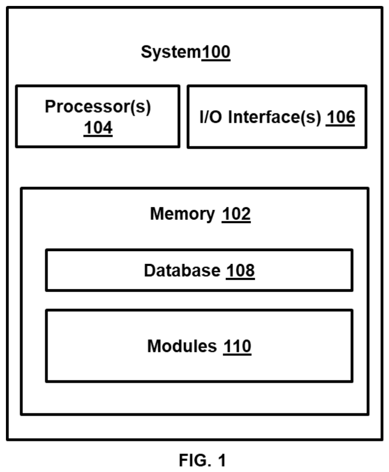

Referring now to the drawings, and more particularly to FIGS. 1 through 6B, where similar reference characters denote corresponding features consistently throughout the figures, there are shown preferred embodiments, and these embodiments are described in the context of the following exemplary system and/or method.

FIG. 1 is a functional block diagram of a system 100 (robot) with a task planning framework for execution of domain specific use-cases (DSUs), in accordance with some embodiments of the present disclosure.

In an embodiment, the system 100, also referred as the robot or a robotic system, includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks,

such as WLAN, cellular and the like. In an embodiment, the I/O interface (s) 106 can include one or more ports for connecting to a number of external devices or to another server or devices. User query instructions in multimodal format, for instructing the LLM to perform tasks of interest in a particular domain, is received via the I/O interface 106.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as the LLM, modules of the robotic ontology system and the like.

The plurality of modules 110 include programs or coded instructions that supplement applications or functions performed by the system 100 for executing different steps involved in the process of building the LLM based task planning framework, also referred to as LLM robotic system planning framework (LLM-RSPF), for execution of domain specific use-cases (DSUs), being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110.

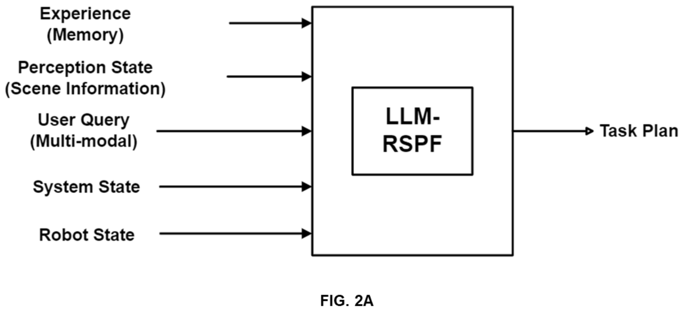

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2A through FIG. 5.

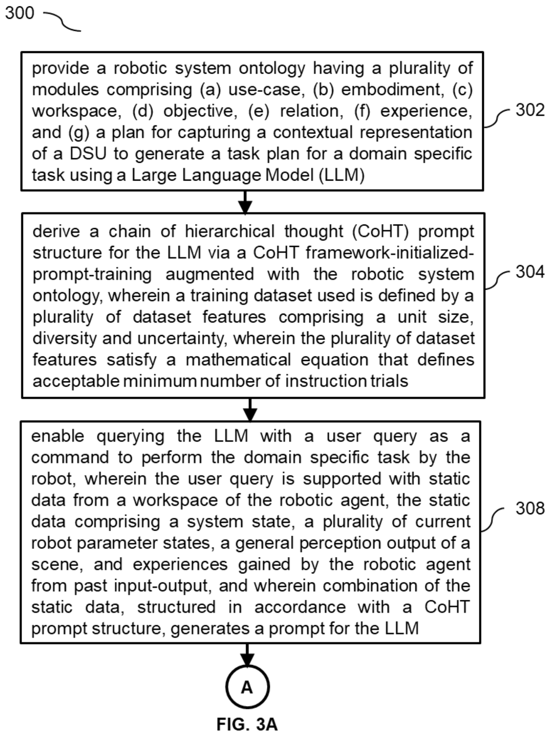

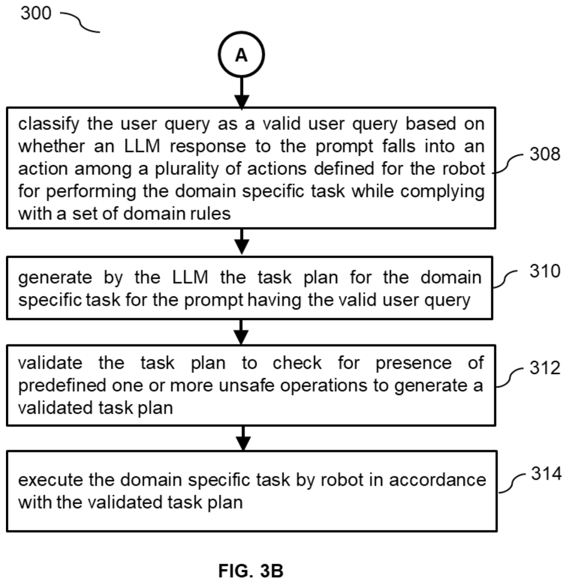

FIGS. 2A through 2C depict the overall architecture of the task planning framework for the, in accordance with some embodiments of the present disclosure. FIGS. 2A through 2C is explained in conjunction with FIG. 3A and 3B.

FIG. 3A and FIG. 3B is a flow diagram illustrating a method for building of the task planning framework (LLM-RSPF) for execution of domain specific use-cases (DSUs) by the system 100 (robot), in accordance with some embodiments of the present disclosure.

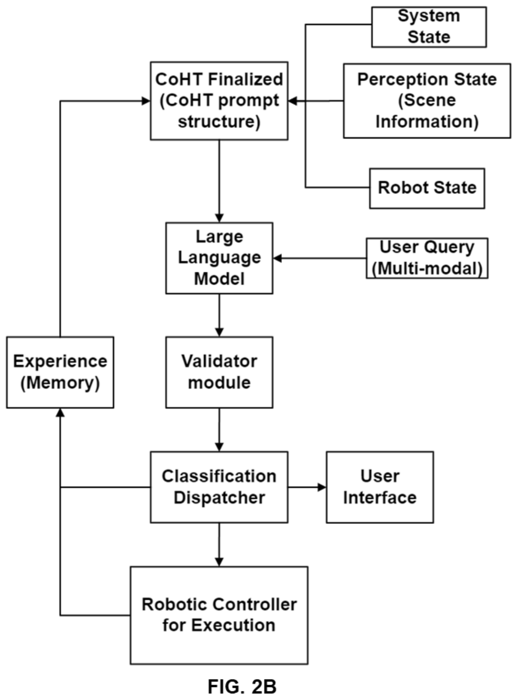

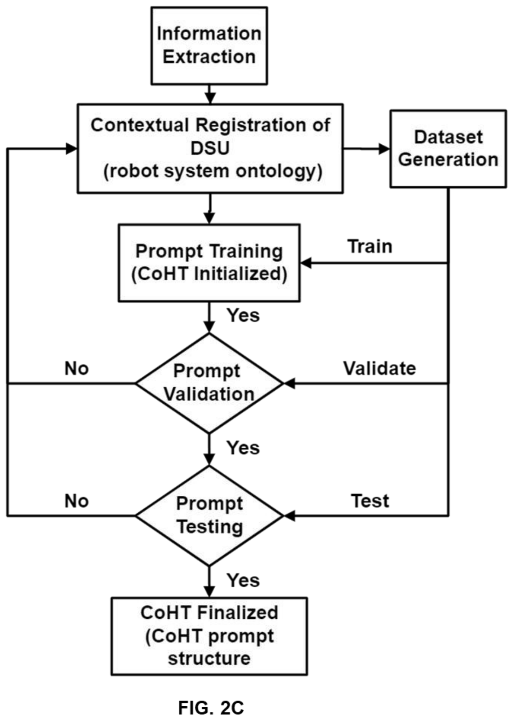

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1, FIG. 2 and the steps of flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

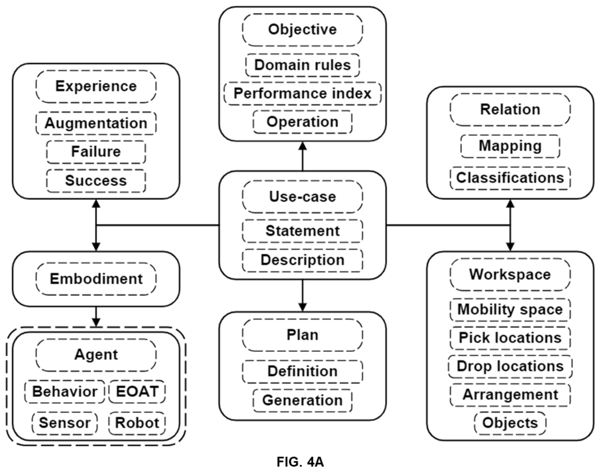

Referring to FIG. 2B depicting the process flow of the task planning framework (LLM-RSPF) and the steps of the method 300, at step 302, the one or more hardware processors 104 are configured by the instructions to provide the robotic system ontology having a plurality of modules. The plurality of modules of the robotic system ontology are depicted in FIG. 4A and include (a) use-case, (b) embodiment, (c) workspace, (d) objective, (e) relation, (f) experience, and (g) a plan for capturing a contextual representation of a DSU to generate task plan for a domain specific task using a Large Language Model (LLM).

(a) The use case enables to define a problem statement and a detailed use case description.
(b) The embodiment enables defining a plurality of agents for collaboratively participating to accomplish the domain specific task.
(c) The workspace enables defining a test bed for the DSU via a plurality of fields comprising a mobility space, pick locations, drop locations, arrangements, and objects.
(d) The objective enables defining domain rules, performance index and operation;
(e) The relation enables defining mapping and classification.
(f) The experience enables defining augmentation, failure and success.
(g) The plan enables providing definition and generation of the task plan

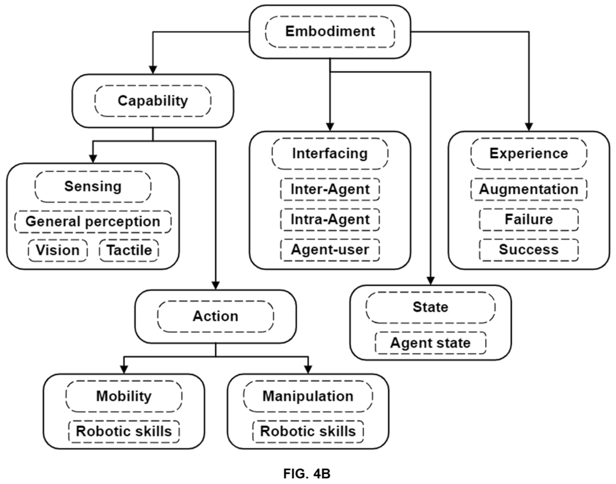

As depicted in FIG. 4B, the different agents of the embodiment that are collaboratively participating to accomplish a specific task namely (a) Physical Robot (b) Behavior (c) End of arm tool (EOAT) (d) Sensor, wherein the agents are further uniquely identified based on Capability, Interfacing, State, and Experience.

The use case module is the parent module, where problem statement and detailed use-case description is provided. It sets the abstract representation of the use-case for any LLM. Statement and Description are the two components responsible for this provision.

The embodiment module defines different Agents that are collaboratively participating to accomplish a specific task. An Agent is uniquely identified through four components, namely (a) Physical Robot (b) Behavior (c) End of arm tool (EOAT) (d) Sensor. The embodiment module is further elaborated based on its Capability, Interfacing, State, and Experience, as illustrated in FIG. 4B. The Capability of the embodiment are classified in the form of sensing and action, which is derived from a ReAct approach known in the literature titled '*React: Synergizing reasoning and acting in language models, 2023.*'

The Sensing empowers the embodiment with the general perception, vision, and tactile perception abilities. The general perception component is typically a vision foundational model-based an open-vocabulary object detection, which provides a real-time workspace information. Next, action serves the "Act" capability depending upon the behavior of an agent. This "Act" capability here connotes Robotic skills. Each Robotic skill is inherently a combination of several atomic skills such as see, move, pick, place, etc., and have its own matured perception, manipulation, and mobility abilities. The reason behind assigning a skill as a compound skill is to ease the complexity of planning, and for scalability of the system through integration of new matured skills. A skill for an agent has its own definition of attributes from the physical workspace components. $K^{th}$ skill of an agent a is defined in the work in literature titled "*Do as i can, not as i say: Grounding language in robotic affordances, 2022.*'.

Moving ahead and state component denotes the current agent state. It can be robot joint angles, grippers attached, etc. Lastly, the experience captures the Agent-level success and failure experiences.

$$ST_{k,a} = \bigcup_{i=1}^{n} attr_{i,a} \qquad (1)$$

The Workspace module defines the test bed of any DSU. It inherently consists of five configurable components. Mobility space defines the detailed mobile space consisting all location identifiers and movement indicators (if any). Objects are the target items that are supposed to be handled by the embodiment, while executing any task. Pick and drop locations refers to the locations specifically allotted in the workspace for any target object to be picked up or dropped by the embodiment. Lastly, arrangement determines the physical arrangement of different agents in the workspace with respect to different location identifiers.

The objective module defines the task objective against the DSU. It sets all the domain rules relevant to the DSU that are supposed to be met during any task planning. In short, the generated plan must adhere to the domain rules at any cost. Performance index are the list of metrics used to assess the performance of an embodied-system against the generated plan. Operation component actually determines the overall operational objectives to be met, which may or may not be a function of performance metrics.

The relation module identifies any relational mappings among components definitions either intra-module or inter-module. For instance, an agent can be tied with picking from a specific location in the workspace. Mapping caters to these relational mappings. Next, classification offers an option to classify user instructions based on its nature such that it is appropriately mapped against different DSU scenarios. This component is quite critical in instruction classification and conversational response generated by the LLM. It eases out the decision-making job of a UI.

The experience module (memory) maintains various system or task relevant intermediary states and stores overall success and failure scenarios. This module helps the LLM recall past experiences and incorporate them in future task planning. The failure experiences are significantly important here as these help in reducing the latency of the system substantially and limits any repeated-failure (ReFailure) scenarios. Further, chat history can be used both in a truncated or a RAG fashion to store experiences.

The plan module consists of the task plan definition and any template-specific conditions that must be adhered to while generating a task plan. A dictionary format adopted against a Robotic skill definition and its sequence in the plan for an agent as in 'Web Ontology Language: OWL, pages 91-110. Springer Berlin Heidelberg, Berlin, Heidelberg, 2009', whereas the final task plan template is denoted by P in 'Taxonomy of educational objectives: The classification of educational goals. Longmans, Green, 1956. ' The generation component defines different types of inputs needed to generate a final task plan.

These inputs can be from State, Sensing, Objective, etc.

$$P_{k,ST_k} : \begin{Bmatrix} k_{1,1} & \dots & k_{S,1} \\ \dots & \dots & \dots \\ k_{1,A} & \dots & k_{S,A} \end{Bmatrix} \rightarrow \begin{Bmatrix} ST_{1,1} & \dots & ST_{S,1} \\ \dots & \dots & \dots \\ ST_{1,A} & \dots & ST_{S,A} \end{Bmatrix} \quad (2)$$

$$P = \bigcup_{a=1}^{A} \bigcup_{k=1}^{S} P_{k,ST_k,a} \quad (3)$$

At step 304 of the method 300, and referring to FIG. 2C, the one or more hardware processors 104 are configured by the instructions to derive a chain of hierarchical thought (CoHT) prompt structure for the LLM via a CoHT framework-initialized-prompt-training augmented with the robotic system ontology. The training dataset by the CoHT framework-initialized-prompt-training is defined by a plurality of dataset features comprising a unit size, diversity, and uncertainty. The wherein the plurality of dataset features satisfy a mathematical equation as provided below in equation 5, which states acceptable minimum number of instruction trials.

LLM-powered Task Planning Regimen:

- Dataset preparation: To get started with the planning regimen, it is important to ensure that the task plan representation is appropriately defined in the plan module. A DSU dataset is a must have requirement in order to achieve a good contextualization of the LLMs. The complete dataset for the contextualization is divided into three portions training, validation, and testing, in the ratio of 1:1:2, respectively. Note, here training terminology is used with reference to the LLM-prompting and does not refer to training LLM from scratch or fine-tuning them. Concerning the dataset creation, three types of estimations are performed as follows.
- Unit size: The dataset creation and its unit size is estimated based on the task plan representation and the classifications defined in the Plan and the Relation modules, respectively. Here, unit size terminology refers to the minimum standard dataset size that can be used to estimate the size of training, validation, and testing dataset. Let us assume that all kind of instruction classifications sums up to m and m^ denote the unit vector corresponding to each classification label. The total Robotic skills derived from equation (2) amounts to S. Considering the $M^{th}$ classification as the only classifications that outputs a valid task plan for total agents A, the total combinations of the instructions corresponding to these two inputs become $\binom{A}{S}$. The $\varepsilon$ factor is chosen such that each classification spans sufficient number of user instructions.
- Diversity: Recognizing the need to ensure sufficient diversity and ambiguity learning catering to different use case scenarios during the contextualization, $\varepsilon'\delta$ is introduced, which refers to the total number of such instructions needed. Note, $\varepsilon'$ must be kept ideally greater than or equal to $\varepsilon$ because it ensures that the dataset pertaining to diverse scenarios are also given equal if not more importance as compared to only Action specific similar scenarios.
- Uncertainty: Uncertainty resembles the number of repeated trials chosen against each classification to ensure repeatability of the generated plan. It is denoted by $g(\omega)$ and is empirically calculated using equation (4). The empirical arrangement in equation (4) follows a typical range mapping logic against a classification priority set as $\omega$. The $\omega$ offers an option to assign weights to different classifications based on their importance and chance of occurrence. A high weighted classification results in a highly confident and a robust instruction set belonging to that classification. Combining both size and diversity estimations, the final dataset unit size comes out to be |D|, whereas the minimum number of instruction trials/experiences required are given by |T| in equation (5). Note, choosing an estimation greater than the outcome of equation (5) is a calculative guarantee made to ensure the desired contextualization of the LLM.

$$g(\omega) = \left\lceil e^{\left(3 - \frac{l}{\ln(\omega+1)}\right)} \right\rceil, \{\omega \in 1, 2, 3, \ldots . \mathbb{N}\} \tag{4}$$

$$|T| \geq \left( \epsilon \sum_{m=1}^{M-1} |m| \widehat{\boldsymbol{m}} + \epsilon \binom{A}{S} \widehat{\boldsymbol{M}} + \epsilon' \delta \widehat{\boldsymbol{M}} \right) \cdot \sum_{m=1}^{M} g(\omega) \widehat{\boldsymbol{m}} \tag{5}$$

Where, $\left( \epsilon \sum_{m=1}^{M-1} |m| \widehat{\boldsymbol{m}} + \epsilon \binom{A}{S} \widehat{\boldsymbol{M}} + \epsilon' \delta \widehat{\boldsymbol{M}} \right)$ refers to dataset size |D|,

$\epsilon \sum_{m=1}^{M-1} |m| \widehat{\boldsymbol{m}} + \epsilon \binom{A}{S} \widehat{\boldsymbol{M}}$ refers to domain rules infusion, $\varepsilon' \delta \hat{M}$ refers to CoHT tuning, and

$\sum_{m=1}^{M} g(\omega) \widehat{\boldsymbol{m}}$ provides uncertainty.

Chain of Hierarchical Thought Prompting (FIG. 2C): Concerning the few-shots, from feeding contextual description to few-shot examples, a new prompting technique is disclosed herein and incorporated as chain of hierarchical thought (CoHT). CoHT prompting is inherently inspired by the Bloom's hierarchy of thought taxonomy known in literature. The CoHT is built on top of the CoT taking its advantages and achieving the desired objectives of a DSU. There are two key introductions made in the CoHT in contrast to the CoT. First, a hierarchical-based prompting on top of the LLM based task planning framework (LLM-RSPF)is used, where instead of linear intermediary reasoning steps alike CoT hierarchical intermediary reasoning is performed. Concerning the complex reasoning involved in domain specific tasks (DSTs), a hierarchical thought process lead to an enhanced modular reasoning by moving from an abstract thinking to a narrow one, which makes the LLM receptive to ambiguous or indirect user instructions. Such a low-level comprehension is found absent in the CoT whenever a complex DSU reasoning is concerned. In other words, the CoHT reasoning involves first abstracting the task into high-level reasoning and subsequently, extending to the lower-level reasoning such that the LLM understands the plausible ambiguities at the object-level or behavior-level. Apart from the Mapping, there is also a provision to explicitly highlight any hard-bound rules at the lower-level reasoning itself to avoid any learning stagnancy. In addition, CoHT also incorporates the framework's modules in a linear hierarchy to bridge multiple reasoning levels. Secondly, recursive criticism and improvement have been implemented such that the LLM performs self-review and refinement of the plan at the generation-level itself. Lastly, the few-shot examples implemented with the CoHT ideally must consist of both success and failure scenarios such that there is no occurrence of any performance-oriented bias.

- CoHT-based Prompt-tuning using Instruction Dataset: Three subset of the dataset is kept for training, validation, and testing in the ratio 1:0.5:2 respectively.
- Prompt-training: The training dataset for Prompt-training is created using human-oracle-based annotations. The Prompt-training primarily targets the first part of the tripartite formula given in equation (5). It focuses on domain rules infusion and settlement of the DSU's abstract-representation in the LLMs. During training, a lot of effort goes into improving the LLM's comprehension on the descriptive segment of the few-shot prompt through repeated plan generations performed over the training dataset. In addition, an elementary commentary understanding is also built-up through the examples. The tuning while training is inherently done by assessing the plan and the relation modules of the robotic system ontology. The evaluation metrics considered for training are (a) Precision (b) Recall (c) F1score.
- Prompt-validation For Prompt-validation, the validation dataset is equal to half of the dataset unit size. It is important to note that the unit size should be such that there must be a minimal impact on the distribution of instructions in the dataset. The Prompt-validation targets the second part of equation (5), which aims to further improvise the built-up intermediary reasoning of the CoHT to address diverse and ambiguous DSU scenarios. Prompt-validation is majorly about effective low-level tuning of the examples in the CoHT since, high-level tuning of the domain rules is most likely accomplished during the Prompt-training. The evaluation metrics considered during the Prompt-validation are (a) Precision (b) Recall (c) F1 score (d) Human-in-Loop (HIL). For further careful tuning of the intermediary reasoning capability during validation, a human-level effort is required, therefore, the HIL is introduced.
- Prompt-testing: The testing size is double the dataset unit size providing ample scope for comprehensive Prompt-testing. The third part of the equation (5) ensures the repeatability test and model confidence, which is critical to examine prior to finalizing and deploying any contextualized LLM. The evaluation metrics considered during the testing are (a)Precision (b) Recall (c) F1 score (d) Human-in-Loop (HIL).

At step 306 of the method 300 and referring to FIG. 2B, the one or more hardware processors 104 are configured by the instructions to enable querying the LLM with a user query as a command to perform the domain specific task by the robot. As depicted in FIG. 2A and 2B, the user query is supported with static data from the workspace defined of the robot for performing the domain specific task. As The static data comprises a system state, a plurality of current robot parameter states, a general perception output of a scene, and experiences gained by the robot from past input-output. Combination of the static data, structured in accordance with a CoHT prompt structure, generates a prompt for instructing the LLM.

At step 308 of the method 300 and referring to FIG. 2B, the one or more hardware processors 104 are configured by the instructions to classify the user query as a valid user query based on whether an LLM response to the query falls into an action among a plurality of actions defined for the robot for performing the domain specific task while complying with a set of domain rules. The classification ensures interactive and efficient operation of the robot. Queries which are relevant are accepted. The task planning framework of the system 100 (the robot), through the classification can inform the user to provide only relevant command. In a situation, if the user queries to the LLM are such that in general the LLM is capable of responding but the user queries are not related to industrial operation, for example, the user query "who won a cricket match, " or something trivial. In such situation, the system 100 can decline the response, which the LLM can generate normally but rather ask the user to use commands which the robot is supposed to perform. Additionally, common sense capability of the LLM is used by the system 100 task planning framework on generating plans, thus, minimizing number of steps to execute in order to complete a task to make the system efficient.

At step 310 of the method 300 and referring to FIG. 2B, the one or more hardware processors 104 are configured by the instructions to generate the task plan for the domain specific task if the prompt is classified as a valid user query for the task plan generation.

At step 312 of the method 300 and referring to FIG. 2B, the one or more hardware processors 104 are configured by the instructions to validate the task plan to check for presence of predefined one or more unsafe operations prior to clearing a validated task plan The validation ensures the task plan is validated before execution for safety check. A LLM might generate a plan which is out of mistaken instruction or some error, additionally it is possible that the robot is able to execute such unsafe actions, but the plan validator, enables terminating such unsafe plans leading, providing intelligent safety actions by the robot. Further, any user queries, which are very close to a valid executable action but misses some data, the robot can help the user by asking to provide those additional data, leading to a well interactive and efficient operation. E.g. instructions which misses the object name, or pick location, or drop location, or having multiple items which can be identified from an instruction as cup (without specifying the color if multiple colored cups are present, etc.) or a combination of all of these.

At step 314 of the method 300 and referring to FIG. 2B, the one or more hardware processors 104 are configured by the instructions to execute the domain specific task via the robot in accordance with the validated task plan. All the actions at classification step and execution steps are stored as experience or memory for task planning of future user queries.

EXPERIMENT:

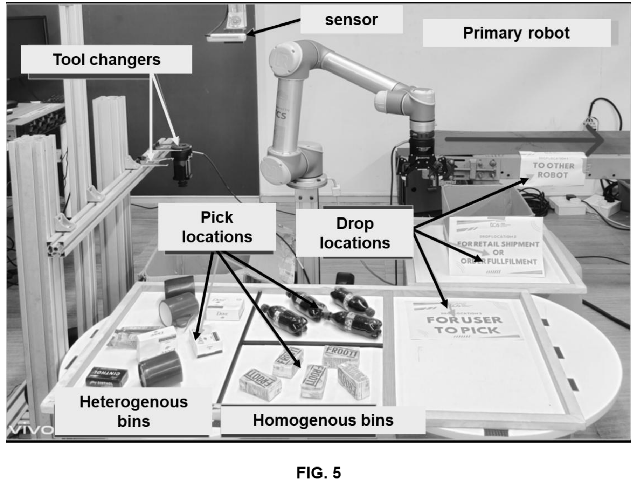

This section exercises the LLM-RSPF (system 100 of FIG 1 and FIG. 2A) and the planning regimen on a real DSU and discusses the generated results. The LLM-RSPF is used for retail Order Fulfilment System with the robotic system ontology as defined below and the experiment is explained with the robot and workspace as depicted in FIG. 5

Use case:

- Problem statement: The objective of the robot is to receive and understand any natural language query/instruction from a human, act upon it adhering to the DSU domain rules, and finally execute it successfully within the acceptable tolerance-level delivering high throughput, success rate, and low latency.
- Description: The use case involves order fulfilment for a retail industry, where a robot pick objects from multiple bins based on a user's instruction and follows a Good-to-Picker model.

**Embodiment:** The embodiment of the system has two fixed base industrial arms (primary <robot_1> and secondary <robot_2>) as agents <agent_1>. The user instructs the primary robot having the capabilities below to execute a task. The system 100 (robot) is equipped with an open-vocabulary object detection-based general perception capability.

For Action, <agent_1> has following Robotic manipulation skills:

1. <dips>: Domain-independent picking skill (DIPS) is a pick and place skill having an un-supervised learning-based perception. The skill attributes are- object count, pick location, and drop location.

2. <iris>: Instance retrieval picking skill (IRIS) uses supervised learning-based perception capability to perform picking for a domain-dependent environment. The skill attributes are- object count, object class name, pick location, and drop location 3. <atcs>: Automatic tool change skill (ATCS) is a custom manipulation skill used to move the manipulator arm between two points following a specific behavior (speed and force). The ATCS is responsible for the change of the EOAT. The skill attributes are- current EOAT, and next EOAT.

Since each picking skill defined above uses a different EOAT, therefore, the robot EOAT as a State is incorporated.

**Workspace:** The DSU workspace is shown in Fig.3. It has two categories of pick location homogeneous object bins (Bin2 and Bin3) and heterogeneous object bin (Bin1) for frequently ordered and less frequently ordered items respectively. It has three drop locations a conveyor (for sending items to secondary robot), a carton box (for order packing), and a location for user retrieval. The items available in (a) Bin1: Red cup, Brown cup, Dove soap, Cinthol soap, Mogra soap, and Coconut oil (b) Bin2: ThumsUp (a black colored soft drink bottle) (c) Bin3: Frooti (a drink in aseptic packaging).

**Objective**

- Domain rules: DIPS skill uses Robotiq 2f-85 (2-finger gripper) as the EOAT to grasp objects, whereas the IRIS uses Robotiq Epick (vacuum gripper). However, this is not a mandatory criterion for the skills to be executed in normal scenario. The objects in homogeneous bins are the items that are frequently ordered. The order of these bins can be changed at run-time, and it is the responsibility of general perception to ensure the nature of bins before executing any user query.

**Relation:** For this DSU, five classes of instructions are considered: Valid, Invalid (non-realizable task), General (generic query), System Information Instruction (SII, system-related query), and Additional Data Request (ADR, instruction requiring additional information for a realizable task).

**Plan:** The plan generation is a 3-step generation method, where first instruction classification is performed to classify the instruction then, plan generation, and lastly plan validation to self-refine the generated plan according to the domain rules. The Plan is a sequential combination of the three skills explained earlier.

**Additional Implementation Details of the Retail Order Fulfilment Use-case:**

The detailed description of some of the modules of the LLM-RSPF ontology corresponding to the retail order fulfilment system discussed earlier are provided below:

- State: The <agent_1> state considered here is the robot EOAT, i.e., <current_eoat>. Since each picking skill defined above uses a different EOAT, therefore, the robot EOAT as a State is incorporated.
- Interfacing: It represents a commentarial communication within intra-Agent, inter-Agent, or Agent-User. Here, the commentaries include intra-Agent communication of object transfer messages between two robots and Agent-User task-relevant conversations.
- Experience: For this DSU, only failure scenarios are considered to avoid ReFailure scenarios.
- Pick location: Bin1 contains heterogeneous set of objects and is intended for objects from high mix low volume category. Bin2 contains homogeneous set of objects. Bin3 contains homogeneous set of objects, however, different from the one available in Bin2.
- Drop location: Drop1 (Conveyor) is a flat belt conveyor to transfer objects from <robot_1> to <robot_2>. Drop2 (Box) is a carton or a retail package box to send objects for packaging or order fulfilment. Drop3 (User) is a convenient fixed location intended for user retrieval.
- Arrangement: The <robot_1> and <robot_2> are at the front and rear-end of the Conveyor, respectively. Concerning the robotic manipulation skills of the 'Embodiment' there are specific reasons behind the choice of adopting domain-independent picking skill (DIPS) and instance-retrieval picking skill (IRIS). These skills are inspired from a Good-to-Picker model in retail order fulfilment. DIPS is advantageous when the system has to adapt quickly to new objects without any deep learning-based training. DIPS is useful for homogeneous items as these can be changed entirely and the system can quickly adapt with it. On the other hand, IRIS targets heterogeneous items, which are intended for object classes from high mix low volume category, a quite popular concept in order fulfilment industry. It helps in achieving high space utilization.

- Mapping: Bin1 ⇌ <iris>; Bin2 ⇌ <dips>; Bin3 ⇌ <dips>; <iris> ⇌ <suction>; <dips> ⇌ ' <2fgripper>.
- Classification:

  - Valid: It results in a valid plan as all plan-relevant information is available in the instruction.
  - Invalid: It requests unreasonable tasks provided the robotic system's capabilities.
  - General: It seeks irrelevant queries about the robotic system.
  - System information instruction (SII): SII seeks system related information such as Workspace details, Embodiment details, etc.
  - Additional data request (ADR): ADR is related to the robotic system and almost valid, however, any one piece of information is missing

**Proposed planning regimen for the system**

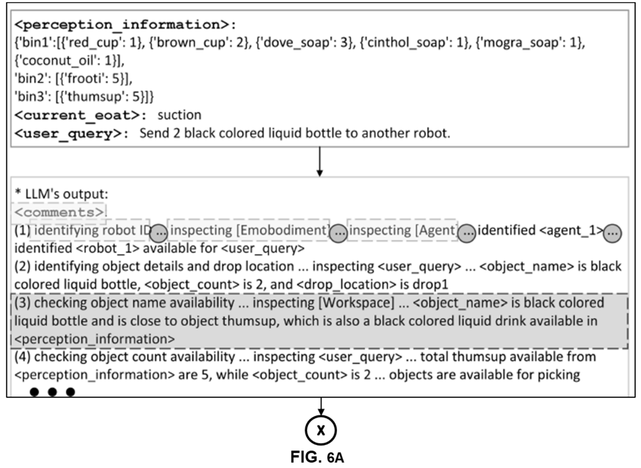

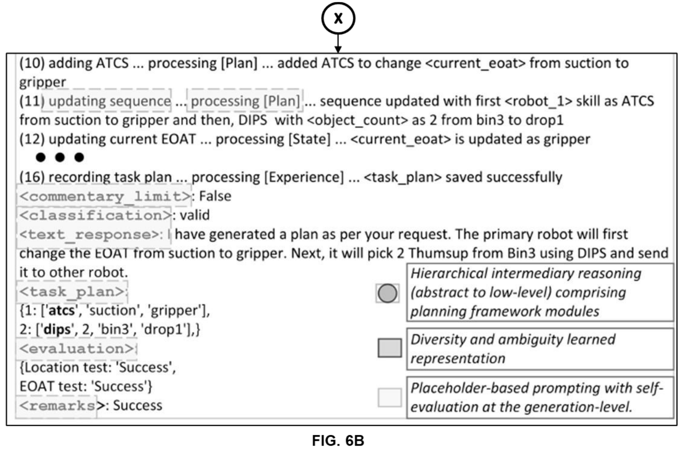

- Dataset: Estimation of Dataset unit size: Considering five classifications of instructions, three robotics skills, single agent, the $\varepsilon'$ as 5, and five instructions per class, the dataset unit size becomes 40 as per the formula in equation (5). The total dataset size as per the prescribed ratio of 1:0.5:2 for training, validation, and testing are 40, 20, and 80 respectively. These 140 instructions are now created using 14 human oracles having briefed about the framework, purpose, and instruction classifications.
- Prompting: The CoHT used as example sequences in few-shot prompting can be understood from the illustration provided in FIG. 6A and 6B. It is to be noted that this depiction is not the complete prompting but instead a snippet, depicting the manner in which CoHT is incorporated in few-shot to generate better results. Initially, the CoHT fundamentally exercises few-shot prompting. Any DSU is interpreted and transformed into an elementary prompt. Next, the standard prompting style of using placeholders, contextual separations using symbolic cues, usage of tone or style, context priming, etc., is used to structure and bring clarity to the prompting. This also helps in setting optimal positioning of the textual domain rules. Moving forward, the next portion of the prompting is defining few-shot examples. It is observed that in DSUs, the LLM's complex reasoning abilities are significantly governed by the domain examples as compared to abstractly representing the domain rules in the form of contextually separated paragraphs. As a consequence, it becomes inevitable to carefully craft the few-shots with sufficient diversity for the LLM to gain contextual understanding in appropriate plan generation. One of the key advantage of the CoHT is the scope of attesting hard-bound rules with each hierarchical thought within a linear reasoning step, which significantly helps in improving LLM's reasoning for any specific event that otherwise is quite difficult to achieve. Although increasing the few-shot examples improves the LLM's performance, however, it is observed that keeping a single highly complex example in place of multiple simple examples improves the LLM's performance substantially. This serves the other purpose as well to reduce the token length by replacing multiple examples with a single one.

RESULTS:

Cost Comparison of different LLMs considered for LLM-RSPF (system 100): A cost analysis of five proprietary LLMs and two opensource LLMs is tabulated in the Table 1.

Table 1

|  |  | Proprietary LLMs | | | | | Open-source LLMs | |
|---|---|---|---|---|---|---|---|---|
|  |  | GPT3 .5 | GPT 3.5 (fine-tuned) | GPT4 -turbo | GPT 4 | Gemini -Pro | ljama2 | Falco n |
| Model Tokens | input | 5380 | 591 | 5380 | 5380 | 3153 | 3000 | 1716 |
|  | output | 500 | 250 | 500 | 500 | 500 | 500 | 250 |
| Cost $1K/token | input | 0.000 5 | 0.003 | 0.01 | 0.03 | 0.0001 25 | 0 | 0 |
|  | training | 0 | 0.008 | 0 | 0 | 0 | 0 | 0 |
|  | output | 0.001 5 | 0.006 | 0.03 | 0.06 | 0.0003 75 | 0 | 0 |
|  | total | 0.003 44 | 0.01000 | 0.068 80 | 0.191 40 | 0.0005 81 | 0 | 0 |

The cheapest and most expensive model available from the GPT are GPT3.5, and GPT4 respectively. The different input tokens specified against each LLM is a result of adapting and fine-tuning of the prompts over time. In terms of performance, GPT4 is the best performing among all and at the same time consumes least amount of tokens, whereas GPT3.5 is the worst. GPT4-Turbo and Gemini-pro are on par with each other, however, Gemini-pro falls short in frequent output token exhaustion and token in-efficiency for longer and highly complex plans. Both the open-source models easily outperform GPT3.5 and share their performance with the GPT3.5 finetuned. It is important to note that GPT3.5 fine-tuned might be a lucrative choice to have, however, it seeks either a high compute or a huge dataset and emerges as quite an expensive one. In contrast, the method and system 100 (LLM-RSPF) disclosed herein achieves similar objectives using only few-shot LLM-prompting for cost reduction. There are several critical hyper-parameters that are considered for configuring the LLM output such as temperature, top p, frequency penalty, and presence penalty. Considering both cost and performance, GPT4-Turbo is a reasonably good choice for the evaluation.

Comparison results of LLM-RSPF (system 100) with other LLM based planning frameworks such as MCRM and ProgPrompt (PgmPmt) are generated and the evaluation results generated on the testing dataset are presented in Table 2.

Table 2

| | | | | Classification accuracy | | | Plan accuracy | | |
| --- | --- | --- | --- | --- | --- | --- | --- | --- | --- |
| | | | | | | | | | |
| Test | User Instruction | Robot state | Class | MCRM | Prgpmt | LLM-RSPF | MCRM | Prgpmt | LLM-RSPF |
| TCT | Pick 3 frootis and 3 thumbsup bottles for delivery. After that, transfer 2 dove soaps and 2 browncups to other robot. Laslty, give me the coconut oil bottle in front of you. | suction | valid | 1 | 1 | 1 | 0 | 1 | 1 |
| SRT | Grab me a black liquid so that I can hand it to over to my friend who is extremely thirsty at the moment and is seeking something to drink. | suction | valid | 1 | 0 | 1 | 1 | 0 | 1 |
| CUT | Give me everything. | suction | valid | 0 | 0 | 1 | 0 | 0 | 1 |
| SRT | Send all soaps for shipment. | suction | valid | 1 | 1 | 1 | 0 | 1 | 1 |
| UAT | Pick any one frooti bottle and send it for order fulfilment. | gripper | valid | 1 | 1 | 1 | 1 | 1 | 1 |

(continued)

| Test | User Instruction | Robot state | | Classification accuracy | | | | Plan accuracy | | |
|---|---|---|---|---|---|---|---|---|---|---|
| | | | Class | MCRM | Prgpmt | LLM-RSPF | MCRM | Prgpmt | LLM-RSPF |
| UAT | Do you have a dove soap? If so then, quickly hand me over the same so that I can proceed with my subsequent work, and I do not have to bother you anymore. | gripper | valid | 1 | 1 | 1 | 1 | 0 | 1 |
| TCT | Give one frooti to conveyor, 1 thumbs up to another robot, and then, a thumbs up to other robot and a frooti to conveyor. | gripper | valid | 1 | 1 | 1 | 0 | 0 | 1 |
| TCT | Pick following items: 1 frooti, 1 red cup, 1 mogra soap, and send them to user, shipment, and other robot, respectively. | suction | valid | 1 | 1 | 1 | 1 | 1 | 1 |
| SRT | I can see a brighter color cup in the bin. Can you pass that to me? | suction | valid | 1 | 0 | 1 | 0 | 0 | 1 |
| UAT | I want an oil bottle; can you give me that? | suction | valid | 0 | 0 | 1 | 0 | 0 | 1 |
| TCT | Send 2 frooti to me, 1 mogra soap and 1 red cup to other robot, 3 thumsup and 2 frooti for order fullfilment and 1 coconut oil for the delivery. | gripper | valid | 1 | 1 | 1 | 1 | 1 | 1 |
| CUT | Send a frooti and dove soap to other robot and put a thumsup in the fridge. | suction | invalid | 0 | 1 | 1 | - | - | - |

(continued)

| Test | User Instruction | Robot state | Class | Classification accuracy | | | Plan accuracy | | |
|------|------------------|-------------|-------|------|--------|-----------|------|--------|-----------|
| | | | | MCRM | Prgpmt | LLM-RSPF | MCRM | Prgpmt | LLM-RSPF |
| CUT | Pick a red cup and drop it in bin2. | suction | invalid | 0 | 1 | 1 | - | - | - |
| CUT | Move a brown cup 10 inches left from its current position. | gripper | invalid | 1 | 1 | 1 | - | - | - |
| DCT | Pick a choke and send it other robot. | gripper | invalid | 1 | 0 | 1 | - | - | - |
| CUT | Pick up 10 thumbs up bottles for delivery. | suction | invalid | 1 | 1 | 1 | - | - | - |
| CUT | Send 2 dove soap for delivery, 1 frooti to the user and 5 frooti to the other robot. | gripper | invalid | 0 | 0 | 0 | - | - | - |
| DCT | When was the first cricket world cup held? | gripper | invalid | 1 | 1 | 1 | - | - | - |
| DCT | What is the weather today in New York? | gripper | general | 1 | 1 | 1 | - | - | - |
| DCT | Tell me the names of top 10 most grossing movies of all time. | gripper 1 | general | 1 | 1 | 1 | - | - | - |
| DCT | Which is the most commonly used robot in delivery warehouses? | gripper | general | 0 | 0 | 1 | - | - | - |
| DCT | Give me the recipe to make a pizza. | gripper general | general | 1 | 1 | 1 | - | - | - |
| DCT | Name the closest galaxy to the milky way. | gripper | general | 1 | 1 | 1 | - | - | - |
| CUT | How many thumsup are there in the bins? | suction | SII | 1 | 1 | 1 | - | - | - |
| CUT | What is your current eoat? | suction | SII | 1 | 1 | 1 | - | - | - |
| CUT | Explain DIPS skill. | suction | SII | 1 | 1 | 1 | - | - | - |

(continued)

| Test | User Instruction | Robot state | Class | Classification accuracy | | | Plan accuracy | | |
|---|---|---|---|---|---|---|---|---|---|
| | | | | MCRM | Prgpmt | LLM-RSPF | MCRM | Prgpmt | LLM-RSPF |
| CUT | My friend wanted to know which skill and eoats are used with which location, can you please explain it to him? | suction | SII | 1 | 1 | 1 | - | - | - |
| SRT | Is there a book in any of the bins? | suction | SII | 1 | 1 | 0 | - | - | - |
| CUT | How many types of soaps are there in the bins? | suction | SII | 1 | 1 | 1 | - | - | - |
| CUT | Send an object from bin1 to the user. | gripper | ADR | 0 | 1 | 1 | - | - | - |
| SRT | Pick a cinthol soap. | gripper ADR | ADR | 0 | 1 | 1 | - | - | - |
| SRT | Empty the bin where the currently attached EOAT is associated to pick objects from. | gripper | ADR | 0 | 1 | 1 | - | - | - |
| CUT | Give me a soap. | gripper | ADR | 1 | 1 | 0 | - | - | - |
| SRT | Send 2 frooti to the user, 1 cinthol soap for delivery, pick 1 mogra soap and send thumsup to other robot. | gripper | ADR | 0 | 0 | 0 | - | - | - |
| CUT | Send a thumsup for delivery and pick a cinthol soap. | gripper | ADR | 0 | 1 | 1 | - | - | - |

A comparison of the LLM-RSPF (system 100) with the two other task planning methods that are closest to have been showcased. These two works include MCRM and ProgPrompt: **Generating Situated Robot Task Plans using Large Language Models.** The efficacy of the LLM-RSPF is also concisely expressed through Table 3. It significantly outperforms both the approaches both in terms of plan and classification accuracy for DSTs. It is observed that the MCRM is good with simple to moderately complex plans and instructions that are unambiguous and easier to reason. Note, while implementing the MCRM a few improvisations have been made such that unwanted environment modifications and frequent user-level feedback are avoided. On the other hand, ProgPrompt works well with only simple plans and performs poorly on highly domain-specific scenarios. Despite the good evaluation metric score of the LLM-RSPF, there are instructions where all 3 methods have failed to classify the instruction correctly. In the 17-th case ("invalid") the LLM fails to re-check the count of Frooti after picking one and incorrectly classifies it, whereas in the 34-th case ("ADR") it assumes the pick location of Mogra soap to be Drop3.

Comparison of CoHT with CoT and ToT: The efficacy of CoHT disclosed by the system 100 over CoT and ToT techniques of using exemplar sequences in few-shot prompting is illustrated in Table 4. A worse and a good-performing LLM, namely GPT3.5 and GPT4-Turbo, respectively, have been considered for generating the results. The evaluation is done for the "valid" instructions from the Table 2. It is palpable that the CoHT as an exemplar sequencing outperforms both CoT and ToT in terms of plan accuracy for both the LLMs. However, the margin is significantly higher with the GPT-4 Turbo. The average output token length (OTL) of the CoHT is nearly equal to the ToT, however, is slightly higher as compared to the CoT.

The scalability of the LLM-RSPF is tested by extending the DSU described in Section 4. To demonstrate its scalability, the extension is carried out by increasing (a) Agent (b) Capability (Sensing and Action) (c) Workspace. Firstly, an Agent as <agent_2> is introduced as a mobile manipulator and two manipulation robots under <agent_1> are added. There are two new Robotic skills added corresponding to two new robots under <agent_1> with different Sensing as tactile perception. Workspace is modified by adding mobility space, pick and drop locations. Mobile manipulators under <agent_1> can have flexible pick and drop locations in contrast to manipulators under <agent_1>, which are fixed and have static pick and drop locations. Due to limited space, the detailed framework adoption is not explained here for the extended use-case, however, it follows the similar approach as explained earlier. The plan accuracy achieved for the extended DSU is around 0.91 with GPT4-Turbo. The results confirm that adopting a modular framework such as LLM-RSPF with compounded Robotic skills are sufficient to make a case for a scalable LLM-powered task planner.

Table 3

| Method | Plan Accuracy | Classification Precision | Classification Recall | Classification F1 score |
|---|---|---|---|---|
| Microsoft+ ChatGPT | 54.54 | 0.80 | 0.79 | 0.79 |
| ProgPrompt | 45.45 | 0.75 | 0.67 | 0.70 |
| LLM-RSPF (system 100) | 100.00 | 0.92 | 0.87 | 0.89 |

Table 4

| Prompt | GPT3.5 (Worst) | | | GPT4-Turbo (Chosen) | | |
|---|---|---|---|---|---|---|
| | ITL | OTL | Plan Accuracy | ITL | OTL | Plan Accuracy |
| CoT | 2551 | 350 | 0.27 | 2551 | 343 | 0.64 |
| ToT | 2622 | 427 | 0.09 | 2622 | 823 | 0.54 |
| CoHT (system 100) | 3170 | 633 | 0.36 | 3170 | 854 | 1.00 |

This, the method, and system 100 provide a task planning framework, also referred to as the Large Language Model-based Robotic System Planning Framework (LLM-RSPF) tailored for domain-specific use cases (DSUs). The framework comprises two key components: a specialized robotic system ontology designed for DSUs, and a LLM-tuning regimen referred to as the Chain of Hierarchical Thought (CoHT), which complements the proposed ontology for cost-effective LLM contextualization. Additionally, an empirical quantification of Prompting datasets to is proposed to optimize LLM-tuning. To evaluate the efficacy of LLM-RSPF, it is applied to a real-world DSU of a retail and packaging industry. Comparative experiments are conducted with popular proprietary and opensource LLM models, accompanied by a cost-to-benefit analysis. Furthermore, the LLM-RSPF disclosed is bench marked against notable works such as Microsoft+ChatGPT and ProgPrompt from the literature, demonstrating its superior accuracy in plan generation and query classification tasks. The LLM-tuning regimen CoHT disclosed herein is compared with CoT and ToT methods, highlighting robustness of CoHT. Finally, scalability testing is performed by increasing the agent, incorporating additional sensing modalities (such as tactile feedback), and expanding the workspace entities, with LLM-RSPF consistently achieving a planning accuracy of 91%.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for building a task planning framework for a robot for domain specific use cases (DSUs), the method comprising:

   providing (302), via one or more hardware processors, a robotic system ontology having a plurality of modules comprising (a) use-case, (b) embodiment, (c) workspace, (d) objective, (e) relation, (f) experience, and (g) a plan for capturing a contextual representation of a DSU to generate a task plan for a domain specific task using a Large Language Model (LLM) executed by the one or more hardware processors;
   deriving (304), via the one or more hardware processors, a chain of hierarchical thought (CoHT) prompt structure for the LLM via a CoHT framework-initialized-prompt-training augmented with the robotic system ontology, wherein a training dataset used is defined by a plurality of dataset features comprising a unit size, diversity and uncertainty, wherein the plurality of dataset features satisfy a mathematical equation that defines acceptable minimum number of instruction trials;
   enabling (306), via the one or more hardware processors, querying the LLM with a user query as a command to perform the domain specific task by the robot, wherein the user query is supported with static data from a workspace of the robotic agent, the static data comprising a system state, a plurality of current robot parameter states, a general perception output of a scene, and experiences gained by the robotic agent from past input-output, and wherein combination of the static data, structured in accordance with a CoHT prompt structure, generates a prompt for the LLM;

classifying (308), via the one or more hardware processors, the user query as a valid user query based on whether an LLM response to the prompt falls into an action among a plurality of actions defined for the robot for performing the domain specific task while complying with a set of domain rules;

generating (310), by the LLM executed by the one or more hardware processors, the task plan for the domain specific task for the prompt having the valid user query;

validating (312), via the one or more hardware processors, the task plan to check for presence of predefined one or more unsafe operations to generate a validated task plan; and

executing (314), via the one or more hardware processors, the domain specific task by robot in accordance with the validated task plan.

2. The processor implemented method as claimed in claim 1, wherein

(a) the use case enables to define a problem statement and a detailed use case description,
(b) the embodiment enables defining a plurality of agents for collaboratively participating to accomplish the domain specific task,
(c) the workspace enables defining a test bed for the DSU via a plurality of fields comprising a mobility space, pick locations, drop locations, arrangements, and objects,
(d) the objective enables defining domain rules, performance index and operation,
(e) the relation enables defining mapping and classification,
(f) the experience enables defining augmentation, failure, and success, and
(g) the plan enables providing definition and generation of the task plan.

3. The processor implemented method as claimed in claim 2, wherein the plurality of agents defined in the embodiment comprise (a) Physical Robot (b) Behavior (c) End of arm tool (EOAT) (d) Sensor collaboratively participate to accomplish a specific task, wherein the plurality of agents are further uniquely identified based on capability, interfacing, state, and experience.

4. The processor implemented method as claimed in claim 1, wherein the task planning framework:

defines a minimum number of datasets required to train and validate the CoHT technique for a reliable performance of the robot,
the robotic system ontology enables the robot to quickly adapt to a new use case for scalability of the framework,
the classification ensures interactive and efficient operation of the robot, and
the validation ensures the task plan is validated before execution for safety check.

5. A system (100) for building a task planning framework for a robot for domain specific use cases (DSUs) , the system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

provide a robotic system ontology having a plurality of modules comprising (a) use-case, (b) embodiment, (c) workspace, (d) objective, (e) relation, (f) experience, and (g) a plan for capturing a contextual representation of a DSU to generate a task plan for a domain specific task using a Large Language Model (LLM) executed by the one or more hardware processors;
derive a chain of hierarchical thought (CoHT) prompt structure for the LLM via a CoHT framework-initialized-prompt-training augmented with the robotic system ontology, wherein a training dataset used is defined by a plurality of dataset features comprising a unit size, diversity, and uncertainty, wherein the plurality of dataset features satisfy a mathematical equation that defines acceptable minimum number of instruction trials;
enable querying the LLM with a user query as a command to perform the domain specific task by the robot, wherein the user query is supported with static data from a workspace of the robotic agent, the static data comprising a system state, a plurality of current robot parameter states, a general perception output of a scene, and experiences gained by the robotic agent from past input-output, and wherein combination of the static data, structured in accordance with a CoHT prompt structure, generates a prompt for the LLM;
classify the user query as a valid user query based on whether an LLM response to the prompt falls into an action among a plurality of actions defined for the robot for performing the domain specific task while complying with a set of domain rules;
generate by the LLM the task plan for the domain specific task for the prompt having the valid user query;
validate the task plan to check for presence of predefined one or more unsafe operations to generate a validated task plan; and
execute the domain specific task by robot in accordance with the validated task plan.

6. The system as claimed in claim 5, wherein,

(a) the use case enables to define a problem statement and a detailed use case description,
(b) the embodiment enables defining a plurality of agents for collaboratively participating to accomplish the domain specific task,
(c) the workspace enables defining a test bed for the DSU via a plurality of fields comprising a mobility space, pick locations, drop locations, arrangements, and objects,
(d) the objective enables defining domain rules, performance index and operation,
(e) the relation enables defining mapping and classification,
(f) the experience enables defining augmentation, failure, and success, and
(g) the plan enables providing definition and generation of the task plan

7. The system as claimed in claim 6, wherein the plurality of agents defined in the embodiment comprise (a) Physical Robot (b) Behavior (c) End of arm tool (EOAT) (d) Sensor collaboratively participate to accomplish a specific task, wherein the plurality of agents are further uniquely identified based on capability, interfacing, state, and experience.

8. The system as claimed in claim 5, wherein the task planning framework:

defines a minimum number of datasets required to train and validate the CoHT technique for a reliable performance of the robot,
the robotic system ontology enables the robot to quickly adapt to a new use case for scalability of the framework,
the classification ensures interactive and efficient operation of the robot,
and
the validation ensures the task plan is validated before execution for
safety check.

9. One or more non-transitory machine-readable information storage mediums comprising one or more instructions which when executed by one or more hardware processors cause:

providing a robotic system ontology having a plurality of modules comprising (a) use-case, (b) embodiment, (c) workspace, (d) objective, (e) relation, (f) experience, and (g) a plan for capturing a contextual representation of a DSU to generate a task plan for a domain specific task using a Large Language Model (LLM) executed by the one or more hardware processors;
deriving a chain of hierarchical thought (CoHT) prompt structure for the LLM via a CoHT framework-initialized-prompt-training augmented with the robotic system ontology, wherein a training dataset used is defined by a plurality of dataset features comprising a unit size, diversity and uncertainty, wherein the plurality of dataset features satisfy a mathematical equation that defines acceptable minimum number of instruction trials;
enabling querying the LLM with a user query as a command to perform the domain specific task by the robot, wherein the user query is supported with static data from a workspace of the robotic agent, the static data comprising a system state, a plurality of current robot parameter states, a general perception output of a scene, and experiences gained by the robotic agent from past input-output, and wherein combination of the static data, structured in accordance with a CoHT prompt structure, generates a prompt for the LLM;
classifying the user query as a valid user query based on whether an LLM response to the prompt falls into an action among a plurality of actions defined for the robot for performing the domain specific task while complying with a set of domain rules;
generating, by the LLM executed by the one or more hardware processors, the task plan for the domain specific task for the prompt having the valid user query;
validating the task plan to check for presence of predefined one or more unsafe operations to generate a validated task plan; and
executing, via the one or more hardware processors, the domain specific task by robot in accordance with the validated task plan.

10. The one or more non-transitory machine-readable information storage mediums as claimed in claim 9, wherein,

(a) the use case enables to define a problem statement and a detailed use case description,
(b) the embodiment enables defining a plurality of agents for collaboratively participating to accomplish the domain specific task,
(c) the workspace enables defining a test bed for the DSU via a plurality of fields comprising a mobility space, pick locations, drop locations, arrangements, and objects,
(d) the objective enables defining domain rules, performance index and operation,
(e) the relation enables defining mapping and classification,
(f) the experience enables defining augmentation, failure, and success, and
(g) the plan enables providing definition and generation of the task plan.

11. The one or more non-transitory machine-readable information storage mediums as claimed in claim 9, wherein the plurality of agents defined in the embodiment comprise (a) Physical Robot (b) Behavior (c) End of arm tool (EOAT) (d) Sensor collaboratively participate to accomplish a specific task, wherein the plurality of agents are further uniquely identified based on capability, interfacing, state, and experience.

12. The one or more non-transitory machine-readable information storage mediums as claimed in claim 9, wherein the task planning framework:

defines a minimum number of datasets required to train and validate the CoHT technique for a reliable performance of the robot,
the robotic system ontology enables the robot to quickly adapt to a new use case for scalability of the framework,
the classification ensures interactive and efficient operation of the robot,
and
the validation ensures the task plan is validated before execution for
safety check.

System<u>100</u>

| Processor(s) <u>104</u> | I/O Interface(s) <u>106</u> |

Memory <u>102</u>

Database <u>108</u>

Modules <u>110</u>

FIG. 1

FIG. 2A

**FIG. 2B**

FIG. 2C

300

provide a robotic system ontology having a plurality of modules comprising (a) use-case, (b) embodiment, (c) workspace, (d) objective, (e) relation, (f) experience, and (g) a plan for capturing a contextual representation of a DSU to generate a task plan for a domain specific task using a Large Language Model (LLM)

302

derive a chain of hierarchical thought (CoHT) prompt structure for the LLM via a CoHT framework-initialized-prompt-training augmented with the robotic system ontology, wherein a training dataset used is defined by a plurality of dataset features comprising a unit size, diversity and uncertainty, wherein the plurality of dataset features satisfy a mathematical equation that defines acceptable minimum number of instruction trials

304

enable querying the LLM with a user query as a command to perform the domain specific task by the robot, wherein the user query is supported with static data from a workspace of the robotic agent, the static data comprising a system state, a plurality of current robot parameter states, a general perception output of a scene, and experiences gained by the robotic agent from past input-output, and wherein combination of the static data, structured in accordance with a CoHT prompt structure, generates a prompt for the LLM

308

**A**

**FIG. 3A**

300

A

| classify the user query as a valid user query based on whether an LLM response to the prompt falls into an action among a plurality of actions defined for the robot for performing the domain specific task while complying with a set of domain rules | 308 |

| generate by the LLM the task plan for the domain specific task for the prompt having the valid user query | 310 |

| validate the task plan to check for presence of predefined one or more unsafe operations to generate a validated task plan | 312 |

| execute the domain specific task by robot in accordance with the validated task plan | 314 |

**FIG. 3B**

FIG. 4A

FIG. 4B

**FIG. 5**

```
<perception_information>:
{'bin1':[{'red_cup': 1}, {'brown_cup': 2}, {'dove_soap': 3}, {'cinthol_soap': 1}, {'mogra_soap': 1},
{'coconut_oil': 1}],
'bin2': [{'frooti': 5}],
'bin3': [{'thumsup': 5}]}
<current_eoat>:  suction
<user_query>:  Send 2 black colored liquid bottle to another robot.
```

* LLM's output:
`<comments>`
(1) identifying robot ID ... inspecting [Emobodiment] ... inspecting [Agent] ... identified <agent_1> ... identified <robot_1> available for <user_query>
(2) identifying object details and drop location ... inspecting <user_query> ... <object_name> is black colored liquid bottle, <object_count> is 2, and <drop_location> is drop1
(3) checking object name availability ... inspecting [Workspace] ... <object_name> is black colored liquid bottle and is close to object thumsup, which is also a black colored liquid drink available in <perception_information>
(4) checking object count availability ... inspecting <user_query> ... total thumsup available from <perception_information> are 5, while <object_count> is 2 ... objects are available for picking
● ● ●

X

**FIG. 6A**

X

(10) adding ATCS ... processing [Plan] ... added ATCS to change <current_eoat> from suction to gripper

(11) updating sequence ... processing [Plan] ... sequence updated with first <robot_1> skill as ATCS from suction to gripper and then, DIPS with <object_count> as 2 from bin3 to drop1

(12) updating current EOAT ... processing [State] ... <current_eoat> is updated as gripper

● ● ●

(16) recording task plan ... processing [Experience] ... <task_plan> saved successfully

<commentary_limit>: False

<classification>: valid

<text_response>: I have generated a plan as per your request. The primary robot will first change the EOAT from suction to gripper. Next, it will pick 2 Thumsup from Bin3 using DIPS and send it to other robot.

<task_plan>:
{1: ['atcs', 'suction', 'gripper'],
2: ['dips', 2, 'bin3', 'drop1'],}

<evaluation>:
{Location test: 'Success',
EOAT test: 'Success'}

<remarks>: Success

○ *Hierarchical intermediary reasoning (abstract to low-level) comprising planning framework modules*

▢ *Diversity and ambiguity learned representation*

▢ *Placeholder-based prompting with self-evaluation at the generation-level.*

**FIG. 6B**

| | Europäisches Patentamt / European Patent Office / Office européen des brevets | **EUROPEAN SEARCH REPORT** | Application Number EP 25 21 7329 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MICHAEL AHN ET AL: "Do As I Can, Not As I Say: Grounding Language in Robotic Affordances", ARXIV.ORG CORNELL UNIVERSITY LIBRARY, 201 OLIN LIBRARY CORNELL UNIVERSITY ITHACA, NY 14853, 4 April 2022 (2022-04-04), XP091199662, * the whole document * | 1-12 | INV. B25J9/16 |
| A | ZHAO XUFENG ET AL: "Chat with the Environment: Interactive Multimodal Perception Using Large Language Models", 2023 IEEE/RSJ INTERNATIONAL CONFERENCE ON INTELLIGENT ROBOTS AND SYSTEMS (IROS), 1 October 2023 (2023-10-01), pages 3590-3596, XP093383434, DOI: 10.1109/iros55552.2023.10342363 * the whole document * | 1-12 | |

**TECHNICAL FIELDS SEARCHED (IPC)**

B25J

The present search report has been drawn up for all claims

| Place of search | Date of completion of the search | Examiner |
|---|---|---|
| The Hague | 30 March 2026 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421096220

**Non-patent literature cited in the description**

- *React: Synergizing reasoning and acting in language models*, 2023
- *Do as i can, not as i say: Grounding language in robotic affordances*, 2022
- Web Ontology Language: OWL. Springer Berlin Heidelberg, 2009, 91-110
- **LONGMANS** ; **GREEN**. *Taxonomy of educational objectives: The classification of educational goals.*, 1956